(19) Europäisches Patentamt

European Patent Office

Office européen des brevets

(11) Veröffentlichungsnummer: **0 290 971 B1**

(12) **EUROPÄISCHE PATENTSCHRIFT**

(45) Veröffentlichungstag der Patentschrift: **29.01.92**

(21) Anmeldenummer: **88107266.4**

(22) Anmeldetag: **06.05.88**

(51) Int. Cl.⁵: **H04N 5/05**

(54) **Schaltungsanordnung zur automatischen Umschaltung der Regelgeschwindigkeit eines Phasenregelkreises.**

(30) Priorität: **13.05.87 DE 3715913**

(43) Veröffentlichungstag der Anmeldung:
**17.11.88 Patentblatt 88/46**

(45) Bekanntmachung des Hinweises auf die
Patenterteilung:
**29.01.92 Patentblatt 92/05**

(84) Benannte Vertragsstaaten:
**AT BE CH DE ES FR GB IT LI LU NL SE**

(56) Entgegenhaltungen:
**EP-A- 0 033 172**
**EP-A- 0 091 719**
**DE-A- 2 826 725**
**US-A- 4 122 488**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Dieterle, Franz**
**Sommerauerstrasse 31**
**W-7742 St. Georgen(DE)**
Erfinder: **Mai, Udo**
**Mühleschweg 2**
**W-7730 VS-Villingen 23(DE)**
Erfinder: **Hartmann, Uwe**
**Tallardstrasse 15**
**W-7730 Villingen-Schwenningen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Schaltungsanordnung zur automatischen Umschaltung der Regelgeschwindigkeit eines ersten Phasenregelkreises für einen Oszillator zur Erzeugung von Ansteuersignalen für die Ablenkung der Elektronenstrahlen in einem Fernsehempfänger, wie z.B. beschrieben in EP-A-0 091 719.

Zwecks Synchronisierung der Zeilenablenkung besitzen Fernsehempfänger einen Regelkreis, der die phasenrichtige Ansteuerung der Zeilenablenkung gewährleistet. Dazu wird der Synchronimpuls des Sendersignals mit dem erzeugten Oszillatorsignal in der Phase verglichen. Das geschieht z.B. derart, daß eine Flanke des erzeugten Oszillatorsignals in Bezug auf den Synchronimpuls genau in dessen Mitte liegt. Abweichungen hiervon ergeben eine Regelspannung, die den Oszillator nachstellt. Diese Regelung muß sehr schnell reagieren, d.h. die Regelgeschwindigkeit muß groß sein, wenn z B. kein Sendersignal vorliegt, um ein schnelles Synchronisieren der phasengeregelten Schleife (PLL) zu gewährleisten Die Regelgeschwindigkeit muß auch groß sein, wenn z.B. das Ausgangssignal eines Videorecorders wiedergegeben werden soll, damit signalbedingte Phasenabweichungen schnell ausgeregelt werden.

Bei Empfang eines verrauschten Sendersignals jedoch muß die Regelgeschwindigkeit klein sein, damit nicht jede Störung als Nutzsignal erkannt wird, was zu Phasenfehlern führt. Dieses Umschalten der Regelgeschwindigkeit bei Videorecorder-Betrieb erfolgt bisher manuell oder dadurch, daß der Videorecorder nur über bestimmte Programmplätze anwählbar ist, bei deren Einschalten die große Regelgeschwindigkeit mit eingeschaltet wurde. Dies hat jedoch zwei große Nachteile. Erstens ist man bei Videorecorder-Betrieb immer auf diese bestimmten Programmplätze angewiesen und zweitens hinterlassen andere z.B. über die SCART-Buchse eingespeiste Signalquellen (z.B. BTX, Videospiele) einen schlechten, unruhigen Bildeindruck.

Der Erfindung liegt die Aufgabe zugrunde, aus dem anliegenden Signal selbst ein Kriterium abzuleiten, das die Umschaltung der Regelgeschwindigkeit automatisch steuert. Diese Aufgabe wird durch die im Patentanspruch angegebene Erfindung gelöst. Weitere Ausgestaltungen der Erfindung ergeben sich aus den Unteransprüchen.

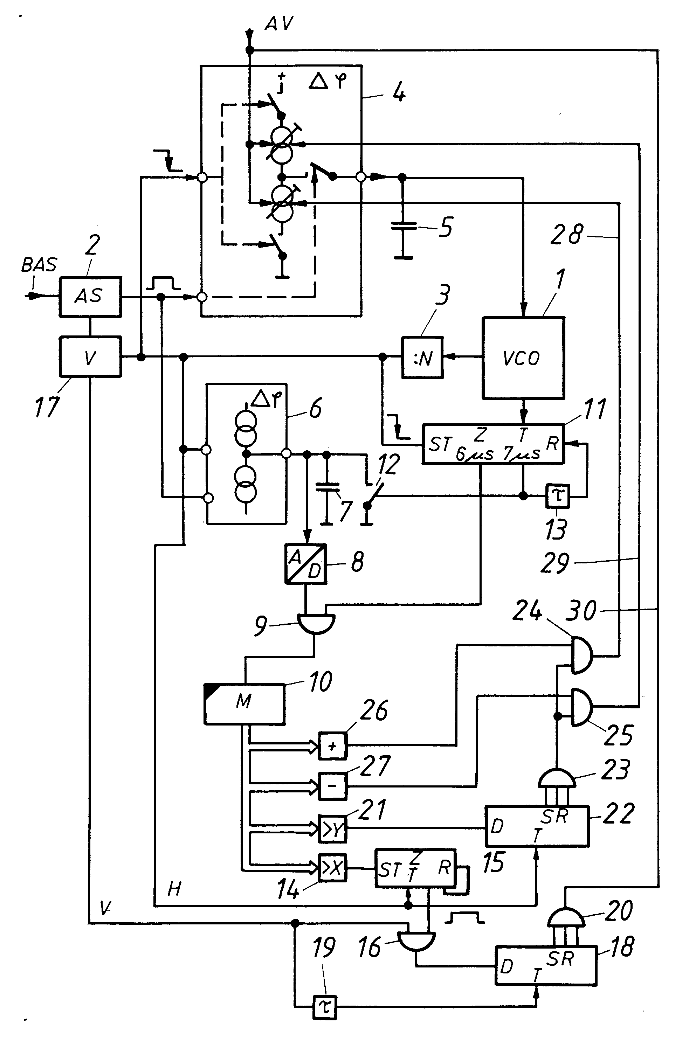

Die Erfindung wird nachstehend an einem Ausführungsbeispiel mit Hilfe der Figur beschrieben, in welcher nur die zur Erläuterung der Erfindung wesentlichen Bauteile eines Fernsehempfängers dargestellt sind.

Es handelt sich bei der Erfindung um die Erzeugung eines mit dem Sendesignal BAS synchronen Zeilenablenkpulses, der mit Hilfe eines Oszillators (VCO) 1 in PLL-Technik erzeugt wird. Dazu wird der aus dem BAS-Signal durch ein Amplitudensieb 2 gewonnene zeilenfrequente Synchronimpuls mit dem erzeugten VCO-Signal in der Phase verglichen, nachdem dieses von z.B. 500 kHz durch einen Frequenzteiler 3 mit einem Teilerfaktor N = 32 auf 15,625 kHz entsprechend der genormten Zeilenfrequenz heruntergeteilt wurde. Dies geschieht in der Phasenvergleichsstufe 4, wie sie beispielsweise in der integrierten Schaltung TEA 2029 realisiert ist. Diese Phasenvergleichsstufe 4 beinhaltet zwei Stromquellen, die vom VCO-Signal flankengesteuert ein- und ausgeschaltet werden. Je nach eingeschalteter Stromquelle wird ein Kondensator 5 ge- oder entladen. Liegt die Flanke genau in der Mitte des Synchronimpulses, ist die Ladung gleich der Entladung und der Kondensator gibt eine Soll-Spannung an den Oszillator 1, so daß das erzeugte Signal in seiner Frequenz und Phase mit der des BAS-Signals übereinstimmt. Die Stromquellen und der Kondensator sind dabei auf einen Wert eingestellt, daß im normalen Fall, d.h. wenn ein Sendersignal vorliegt, die Regelgeschwindigkeit zwecks Störbefreiung entsprechend klein ist. Wird der Fernsehempfänger an einen Videorecorder angeschlossen, muß diese Regelgeschwindigkeit erhöht werden, weil das Synchronsignal des Videorecorders in dem Zeitraum der Kopfumschaltung größere Phasensprünge enthält. In dem gewählten Beispiel geschieht die Erhöhung der Regelgeschwindigkeit dadurch, daß der Strom der Stromquellen erhöht wird, was durch die Pfeile angedeutet ist.

Nachfolgend wird die Wirkungsweise der Erfindung beschrieben, mit der die Umschaltung der Regelgeschwindigkeit automatisch erfolgt. Auch andere Schaltungen zu diesem Zweck sind möglich. Die beschriebene gilt nur als Beispiel für eine Auführungsform.

Parallel zur ersten Phasenvergleichstufe 4 ist eine zweite Phasenvergleichstufe 6 geschaltet, die genauso aufgebaut ist wie die Phasenvergleichstufe 4, die jedoch mit einer sehr kleinen Zeitkonstante arbeitet. Die Phasenvergleichstufe 6 erzeugt eine Regelspannung an einem Speicher in Form des Kondensators 7, der sich innerhalb der Zeilensynchronimpulse auf einen der Phasenabweichung entsprechenden Wert auflädt. Der Meßwert wird in einem Analog-Digital-Wandler 8 in einen digitalen Wert umgeformt und über ein Tor 9 in einem Speicher 10 zwischengespeichert. Die Übernahme des Wertes in den Speicher 10 wird durch eine Steuerschaltung 11 bewirkt. Die Steuerschaltung 11 ist in Form eines Zählers aufgebaut, der mit Auftreten der Flanke aus dem Frequenzteiler 3 gestartet wird. Nach einem Bruchteil der Zeilenperiode, z.B. nach 6 Mikrosekunden, wird das Tor 9 geöffnet.

Nach einer weiteren Mikrosekunde wird ein Schalter 12 geschlossen, so daß der Kondensator 7 wieder entladen wird und für eine neue Messung während des nächsten Zeilensynchronsimpulses zur Verfügung steht. Der Zähler wird durch das Ausgangssignal des Oszillators 1 getaktet. Zurückgesetzt wird die Steuerschaltung 11 über eine Verzögerung 13, nachdem der Schalter 12 kurzzeitig geschlossen wurde. Der in dem Speicher 10 gespeicherte Wert wird in einer Stufe 14 mit einem vorgebbaren Wert verglichen, bei dessen Überschreiten ein Zähler 15 gestartet wird, der mit der Zeilenfrequenz getaktet wird. Liegt also eine größere Phasenabweichung vor, wird der Zähler für eine bestimmte Dauer, z.B. während 30 Zeilen, über ein Tor 16 ein Zeitfenster öffnen, in welches ein aus der V-Logik-Schaltung 17 kommendes Vertikalsynchronsignal fallen kann. Die V-Logik-Schaltung 17 ist ausführlich beschrieben in der DE-P 31 27 493. Fällt ein Vertikalsynchronsignal in dieses Zeitfenster, gelangt ein Impuls auf ein Schieberegister 18, welches durch das V-Synchron-Signal über eine Verzögerung 19 getaktet wird. Fallen mehrere derartige Signale aus der Torschaltung 16, z.B. drei, hintereinander an, ist dies ein Zeichen dafür, daß die große Phasenabweichung kurz vor dem vertikalen Rücklauf erfolgt, was nur in Verbindung mit dem Betrieb eines Videorecorders der Fall ist. Durch das mehrmalige hintereinander liegende Auftreten eines Impulses aus der Torschaltung 16 wird über eine Und- Schaltung 20 und Leitung 30 das Signal zur Steuerung der Stromquellen auf eine höhere Stromstärke und damit auf eine größere Regelgeschwindigkeit erzeugt.

Kleine Phasenabweichungen während des Bildhinlaufs werden mit kleiner Regelgeschwindigkeit d.h. großer Zeitkonstante ausgeregelt. Große Abweichungen dagegen, die zum Beispiel 8 Zeilen vor dem vertikalen Rücklauf z.B. drei Mal hintereinander erkannt werden, verursachen eine Umschaltung auf eine große Regelgeschwindigkeit mit kleiner Zeitkonstante.

Die beschriebene Schaltungsanordnung beinhaltet noch weitere Mittel zur Beeinflussung der Regelgeschwindigkeit in Abhängigkeit von der Größe und Richtung der Phasenabweichung. Überschreitet ein aus dem Speicher 10 gewonnener Wert einen in der Vergleichsstufe 21 vorgegebenen Wert, wird ein von den Horizontalimpulsen getaktetes Schieberegister 22 über eine Torschaltung 23, zwei Tore 24 und 25, vorbereiten. Die Richtung der Phasenabweichung wird in Stufen 26 und 27 festgestellt, welche Signale über die Leitungen 28, 29 an eine der Stromquellen der Phasenvergleichstufe 4 zur Umschaltung des Stromes und der Erhöhung der Regelgeschwindigkeit liefern. Die Regelgeschwindigkeit bleibt so lange erhöht, bis die Phasenabweichung einen vorgegebenen Wert unterschreitet. Nicht in der Figur dargestellt, jedoch möglich ist es auch, Phasenabweichungen während mehrerer Zeilen festzustellen, um daraufhin die Phasenregelung mit hoher Geschwindigkeit zu betreiben, wobei gleichzeitig der Strom in der Phasenvergleichstufe 6 erhöht wird. Erst, wenn die Phasenabweichungen verschwinden wird wieder auf die kleine Regelgeschwindigkeit zurückgeschaltet, indem der Strom verkleinert wird.

Es liegt im Rahmen der Erfindung, die Auswertung der Information einer Phasenabweichung zwischen Oszillatorsignal und Synchronsignal in Größe, Richtung und zeitlicher Lage zur Umschaltung der Regelgeschwindigkeit des Phasenregelkreises auf andere als in dem Ausführungsbeispiel beschriebenen Weise vorzunehmen.

**Patentansprüche**

1. Schaltungsanordnung zur automatischen Umschaltung der Regelgeschwindigkeit eines Phasenregelkreises mit einer ersten Phasenvergleichstufe (4) für einen Oszillator (1) zur Erzeugung von Ansteuerimpulsen für die Ablenkung von Elektronenstrahlen in der Bildröhre eines Fernsehempfängers und mit einer Erkennungsschaltung, die eine Phasenabweichung zwischen dem Oszillatorsignal und dem Synchronisiersignal feststellt, **dadurch gekennzeichnet,** daß parallel zur ersten Phasenvergleichstufe (4) eine zweite Phasenvergleichstufe (6) geschaltet ist, deren Zeitkonstante so klein gewählt ist, daß sie Phasenabweichungen des Oszillatorsignals innerhalb einer Zeilenperiode detektiert, die in einem Speicher (7) festgehalten werden, und daß eine Vergleichseinrichtung (14) vorgesehen ist, die bei Überschreiten einer oder mehrerer vorgebbarer Phasenabweichungsgrößen die Regelgeschwindigkeit des Phasenregelkreises (1, 3, 4, 5) vergrößert.

2. Schaltungsanordnung nach Anspruch 1, **dadurch gekennzeichnet,** daß Mittel (15, 16, 17, 18, 19, 20) vorgesehen sind, die bei Auftreten einer Phasenabweichung ein Zeitfenster öffnen und nach einer vorgebbaren Zeit wieder schließen und die Regelgeschwindigkeit des ersten Phasenregelkreises (1, 3, 4, 5) vergrößern, falls in das Zeitfenster der Vertikalrücklaufimpuls fällt.

3. Schaltungsanordnung nach Anspruch 1, **dadurch gekennzeichnet,** daß der Speicher (7) als Analogspeicher ausgebildet ist.

4. Schaltungsanordnung nach Anspruch 1, **dadurch gekennzeichnet,** daß der Speicher (7) ein Digitalspeicher ist.

5. Schaltungsanordnung nach den Ansprüchen 1 bis 4, **dadurch gekennnzeichnet,** daß weitere Vergleichseinrichtungen (21-27) vorgesehen sind, die in Abhängigkeit von der Richtung der Phasenabweichung die Regelgeschwindigkeit des ersten Phasenregelkreises in einer die Abweichung vermindernden Richtung (4) so lange vergrößern, bis die Sollphasenlage erreicht ist.

## Claims

1. Circuit arrangement for the automatic changeover of the control rate of a phase-locking loop with a first phase comparison stage (4) for an oscillator (1) to produce trigger pulses for the deflection of electron beams in the picture tube of a television receiver and with a recognition circuit, which detects a phase difference between the oscillator signal and the synchronizing signal, characterized in that parallel to the first phase comparison stage (4) a second phase comparison stage (6) is connected, the time constant of which is selected so as to be so small that it detects phase differences of the oscillator signal within a line period, which are held in a storage device (7), and that a comparator (14) is provided, which increases the control rate of the phase-locking loop (1, 3, 4, 5) when one or more specifiable phase difference magnitudes are exceeded.

2. Circuit arrangement according to claim 1, characterized in that means (15, 16, 17, 18, 19, 20) are provided which open a time window when a phase difference appears and close it again after a specifiable time and increase the control rate of the first phase locking loop (1, 3, 4, 5) if the vertical flyback pulse falls into the time window.

3. Circuit arrangement according to claim 1, characterized in that the storage device (7) is formed as an analog storage device.

4. Circuit arrangement according to claim 1, characterized in that the storage device (7) is a digital storage device.

5. Circuit arrangement according to claims 1 to 4, characterized in that further comparators (21-27) are provided, which depending on the direction of the phase difference increase the control rate of the first phase-locking loop in a direction (4) reducing the difference until the desired phase position is reached.

## Revendications

1. Dispositif de circuit pour la commutation automatique de la vitesse de réglage d'une boucle d'asservissement de phase avec un premier étage comparateur de phase (4) pour un oscillateur (1) pour la génération d'impulsions d'attaque pour la déflexion de faisceaux d'électrons dans le tube image d'un récepteur de télévision et avec un circuit de reconnaissance qui constate un décalage de phase entre le signal de l'oscillateur et le signal de synchronisation, **caractérisé en ce** que, parallèlement au premier étage comparateur de phase (4), un second étage comparateur de phase (6) est commuté dont la constante de temps est choisie si petite qu'elle détecte des décalages de phase du signal de l'oscillateur à l'intérieur de la période d'une ligne, décalages qui sont retenus dans une mémoire (7) et qu'il est prévu un dispositif comparateur (14) qui augmente la vitesse de réglage de la boucle d'asservissement de phase (1, 3, 4, 5), lorsqu'une ou plusieurs grandeurs de décalage de phase qui peuvent être prédéterminées sont dépassées.

2. Dispositif de circuit selon la revendication 1, **caractérisé en ce** que des moyens (15, 16, 17, 18, 19, 20) sont prévus qui, lorsqu'il apparaît un décalage de phase, ouvrent une fenêtre de temps et qui la referment après une durée qui peut être prédéterminée et qui augmentent la vitesse de réglage de la première boucle d'asservissement de phase (1, 3, 4, 5), au cas où l'impulsion de retour vertical tombe dans la fenêtre de temps.

3. Dispositif de circuit selon la revendication 1, **caractérisé en ce** que la mémoire (7) est conçue comme une mémoire analogique.

4. Dispositif de circuit selon la revendication 1, **caractérisé en ce** que la mémoire (7) est une mémoire numérique.

5. Dispositif de circuit selon les revendications 1 à 4, **caractérisé en ce** que d'autres dispositifs comparateurs (21-27) sont prévus qui augmentent la vitesse de réglage de la première boucle d'asservissement, en fonction du sens du décalage de phase, dans un sens (4) qui diminue le décalage jusqu'à ce que la relation théorique des phases soit obtenue.